(19)

Europäisches
Patentamt
European
Patent Office
Office européen
des brevets

(11) **EP 3 358 959 B1**

(12) **EUROPEAN PATENT SPECIFICATION**

(45) Date of publication and mention
of the grant of the patent:
**29.04.2020  Bulletin 2020/18**

(21) Application number: **16781308.8**

(22) Date of filing: **30.09.2016**

(51) Int Cl.:
***A21D 8/04*** *(2006.01)*

(86) International application number:
**PCT/EP2016/073383**

(87) International publication number:
**WO 2017/060165 (13.04.2017 Gazette 2017/15)**

(54) **STABLE LIQUID LEAVENING PRODUCTS**

STABILE FLÜSSIGE SÄUERUNGSPRODUKTE

PRODUITS LEVANTS LIQUIDES STABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2015  BE 201505633**

(43) Date of publication of application:
**15.08.2018  Bulletin 2018/33**

(83) **Declaration under Rule 32(1) EPC (expert
solution)**

(73) Proprietor: **Puratos N.V.
1702 Groot-Bijgaarden (BE)**

(72) Inventors:
• **LACAZE, Guylaine
4500 Huy (BE)**

• **GLORIEUX, Steve
4480 Engis (BE)**
• **GENOT, Bernard
4530 Vieux-Waleffe (BE)**

(74) Representative: **De Clercq & Partners
Edgard Gevaertdreef 10a
9830 Sint-Martens-Latem (BE)**

(56) References cited:
**EP-A1- 1 711 062      EP-A1- 2 801 257
EP-A2- 0 564 782      EP-A2- 0 806 144
WO-A1-00/10395        WO-A2-03/048342
WO-A2-2007/008370**

**Description**

**FIELD OF THE INVENTION**

The present invention relates to a method for preparing stable liquid leavening products for food applications, more particularly for baked products, to their use and their production.

**BACKGROUND OF THE INVENTION**

Bread and baked product are usually obtained through the baking of a dough obtained by the fermentation of cereal flour, such as wheat flour, by a leavening agent. The most common leavening method is to add baker's yeast as the leavening agent directly to the dough before mixing and fermentation. The most common yeast used in baking is *Saccharomyces cerevisiae.* Yeast may be introduced in the dough as a liquid product (cream yeast), as compressed fresh yeast or as a dried product (active dry yeast or instant active dry yeast).

The leavening of a dough may be realized by other means, more particularly by introducing other types of active leavening agents such as a mother dough, a sourdough or a sponge. A mother dough is a dough obtained by spontaneous fermentation of water and flour at 30-35°C by lactic acid bacteria and yeast(s). A sourdough is generally obtained by the fermentation of cereal flour by lactic acid bacteria and/or yeast, having a characteristic acidic flavour due to lactic acid bacteria producing mainly lactic acid, acetic acid and some minor compounds and the typical flavour top-notes produced by the yeast. A sponge is generally obtained by the fermentation of cereal flour by yeast, having a characteristic flavour due to said yeast fermentation. These leavening agents may be under liquid or paste form. Besides or instead of cereal flour the raw materials may include hydrolyzed cereals, cereal (flour) fractions, ... Furthermore, many different species of yeast and bacteria have been identified, these being responsible of the many different flavours that may be found in baked products (for a review see for example Salim-ur-Rehman, Trends in Food Science and Technology (2006) vol 17, p. 557).

Such active leavening agents need to be stored at low temperature and have a limited conservation. EP0684306B2 and EP0684308B2 describe for example liquid leavening products stabilized by filtration or centrifugation that are stable for about 21 days.

EP1711062 discloses that the presence of fermentable sugars or flour, even at very low levels, has a negative effect on the stability of liquid leavening compositions. EP1711062 thus disclosed that in order to obtain stable liquid leavening compositions the residual sugar level of the liquid leavening composition must be kept below 0.5 wt%, to prevent refermentation of the liquid yeast product during storage, such as by performing the hydrolysis of flour or starch, present in the leavening composition, and eliminating the liberated sugars by a microbial fermentation step.

The use of enzymes to improve the performances of the baking process at the dough or the baked product level is well known. Amyloglucosidase for example is used to increase the level of available sugars responsible for the crust browning.

Today, most of the liquid leavening products based on cereal or cereal hydrolysates fermentation show a poor stability during the storage, even at low temperature. There is therefore a need for more stable liquid leavening products for the preparation of baked products.

**SUMMARY OF THE INVENTION**

The present invention relates to methods to stabilize a liquid leavening product.

A first object of the present invention relates to a method to stabilize an active liquid leavening composition comprising active yeast and/or lactic acid bacteria cells, or to a method to obtain such an active liquid leavening composition, wherein said method comprises the step of adding a source of amylase to said liquid leavening composition.

In particular, the present invention relates to a method to stabilize an active liquid leavening composition comprising active yeast cells and optionally lactic acid bacteria cells, wherein said method comprises the steps of

(i) mixing a fermentation substrate, comprising a cereal, a cereal fraction and/or a cereal hydrolysate, with water to obtain a fermentation mixture;
(ii) adding to the fermentation mixture one or more yeast strains, and optionally one or more lactic acid bacteria strains; and
(iii) fermenting the fermentation mixture to obtain a liquid leavening composition; prior to (iv) the addition of the source of amylase to said liquid leavening composition;

wherein the remaining amount of fermentable sugar of the liquid leavening composition is at least 0.5 wt%.

There is also disclosed a stable liquid leavening composition comprising (i) a liquid microbial composition comprising active yeast and/or lactic acid bacteria cells and a fermented cereal substrate, wherein said substrate comprises one or more cereals, cereal fractions and/or cereal hydrolysates; and (ii) a source of amylase. In particular embodiments, said stable liquid leavening composition has a fermentable sugar level of at least 0.5 wt%.

In particular, there is disclosed a stable liquid leavening composition comprising (i) a liquid microbial composition comprising active yeast cells and optionally lactic acid bacteria cells and a fermented cereal substrate, wherein said substrate comprises one or more cereals, cereal fractions and/or cereal hydrolysates; (ii) a source of amylase and (iii) a fermentable sugar level of at least 0.5 wt%.

In particular embodiments of the present invention, the source of amylase is an alpha-amylase, an amyloglucosidase or active malt flour or any combination thereof, In particular embodiments, the source of amylase is:

- an alpha-amylase in a concentration between 10 and 80 SKB/g liquid leavening agent; and/or
- an amyloglucosidase in a concentration between 1 and 30 AGU/g liquid leavening agent; and/or
- active malt flour in a concentration between 1 and 16 DU/g liquid leavening agent. In a particularly preferred embodiment, the source of amylase is an amyloglucosidase and/or active malt flour, most preferably is active malt flour.

In particular embodiments of the present invention, the active liquid leavening agent comprises at least one *Saccharomyces* or *Kazachstania* strain as at least one of the yeast strains present in the liquid leavening agent. More in particular, said yeast strain comprises at least one *Saccharomyces cerevisiae* or *Kazachstania bulderi* strain. Most preferably, said yeast strain comprises *Kazachstania bulderi* strain MUCL54530.

In particular embodiments of the present invention, the liquid leavening composition comprises an amount of yeast cells between about $10^5$ and about $5.10^9$ cfu/ml and, optionally, an amount of lactic acid bacteria between 0 and $1.10^9$ cfu/ml.

In particular embodiments of the present invention, the liquid leavening composition has a pH between about 3.4 and about 6.

In particular embodiments of the present invention, the method to obtain a stable liquid leavening composition or the method to stabilize a liquid leavening composition further comprising the steps of:

(i) mixing a fermentation substrate, comprising a cereal, a cereal fraction and/or a cereal hydrolysate, with water to obtain a fermentation mixture;
(ii) adding to the fermentation mixture one or more yeast strains, and/ or one or more lactic acid bacteria strains; and
(iii) fermenting the fermentation mixture to obtain a liquid leavening composition; prior to (iv) the addition of the source of amylase.

In particular embodiments, the fermentation substrate further comprises a nitrogen source, a phosphorous source, vitamins and/or minerals.

In particular embodiments, the method of the present invention further comprises the step of (v) adding one or more additional yeast strains and/or lactic acid bacteria In particular embodiments, the method of the present invention further comprises the step of (vi) adding additional stabilizing agents to the obtained liquid leavening composition.

Another aspect of the present invention relates to a method to prepare a baked product comprising the steps of (a) preparing a stable liquid leavening composition by the steps of (i) mixing a fermentation substrate, comprising a cereal, a cereal fraction and/or a cereal hydrolysate, with water to obtain a fermentation mixture;(ii) adding to the fermentation mixture one or more yeast strains, and optionally one or more lactic acid bacteria strains; and(iii) fermenting the fermentation mixture to obtain a liquid leavening composition; prior to (iv) the addition of the source of amylase to said liquid leavening composition; wherein the remaining amount of fermentable sugar of the liquid leavening composition is at least 0.5 wt%; and wherein the liquid leavening composition comprises an amount of yeast cells between about 105 and about 5.109 cfu/ml; and(b) adding the obtained stable liquid leavening composition to the recipe of said baked product.

The above and other characteristics, features and advantages of the concepts described herein will become apparent from the following detailed description, which illustrates, by way of example, the principles of the invention.

## DETAILED DESCRIPTION OF THE INVENTION

Before the present compositions, methods, uses, baked products, and strains used in the invention are described, it is to be understood that this invention is not limited to particular compositions, methods, uses, baked products, and strains described, as such compositions, methods, uses, baked products, and strains may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any method and material similar or equivalent to those described herein may be used in practice or testing of the present invention, the preferred methods and materials are now described.

In this specification and the appended claims, the singular forms "a", "an", and "the" include plural references unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The term "about" as used herein when referring to a measurable value such as a parameter, an amount, a temporal duration, and the like, is meant to encompass variations of +/- 10% or less, preferably +/- 5% or less, more preferably +/- 1% or less, and still more preferably +/- 0.1% or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

The inventors of the present invention have surprisingly found that it was possible to stabilize liquid leavening agents and to obtain a stable liquid leavening composition having an increased shelf life which retain its fermentation power during storage by the use of enzymes having amylase activity, i.e. enzymes capable of hydrolysing the alpha-1,4-glycosidic bonds in glucose polymers such as e.g. starch and dextrins,. Indeed, the inventors found that, upon amylase supplementation, liquid leavening compositions exhibit a more stable fermentation power or leavening power, or stated differently a more stable $CO_2$ production level during fermentation, after storage of the liquid leavening composition for several weeks, when compared to the unsupplemented liquid leavening agents. Surprisingly, this stabilising effect of amylases was independent of the fermentable sugar level of the liquid leavening composition, and this effect could even be seen at sugar levels above 0.5 wt%. Advantageously, in the methods and compositions of the present invention no measures or steps need to be taken to eliminate most fermentable sugars (typically having a degree of polymerisation of 1 or 2) and to ensure that the residual fermentable sugar level of the liquid leavening composition is kept below 0.5 wt%, 0.4 wt%, 0.3 wt%, 0.2 wt% or 0.1 wt%.

In the context of the present invention, the terms "liquid leavening agent", "liquid leavening composition" and "liquid leavening product" are generally used interchangeably and refer to a liquid product derived from the fermentation of a cereal, cereal fractions, cereal hydrolysates or cereal (fractions) by-products that contains active yeasts and optionally active lactic bacteria in an amount sufficient to allow the leavening of a dough, such as being able to produce (all) the $CO_2$ needed to achieve a good rising of a dough during the fermentation step(s) (before baking). In particular, as envisaged herein, the term "stable liquid leavening composition" refers to a liquid leavening agent stabilized or obtained by a method according to the present invention.

The yeast, as envisaged herein, may be any yeast strain suitable for dough leavening. Suitable strains may be chosen among *Saccharomyces, Candida, Pichia, Kazachstania, Torulaspora, Kluyveromyces, Meyerozyma, Wieckerhamomyces, Lachancea* or *Metschnikowia* strains; Preferably the yeast strain is a *Saccharomyces* strain or a *Kazachstania* strain. More preferably the yeast strain is *Saccharomyces cerevisiae* or *Kazachstania bulderi* strain. In particular embodiments, the yeast strain is *Kazachstania bulderi* deposited under accession number MUCL54530 (see Table 1 for deposit information).

Table 1: Indications relating to deposited microorganism MUCL54530

| Accession number given by depositary institution | MUCL 54530 |
|---|---|
| Identification reference given by the depositor | SE3 |
| Name of depositary institution | Belgian Coordinated Collections of Microorganisms BCCM/MUCL |
| Address of depositary institution | Université Catholique de Louvain (UCL) Laboratory of Mycology Place Croix du Sud; 3 B-1348 Louvain-la-Neuve Belgium |
| Date of deposit | January 8, 2013 |
| Name of depositor | PURATOS NV |

| Address of depositor | Industrialaan 25 |
| --- | --- |
| | B-1702 Groot-Bijgaarden |
| | Belgium |

The bacterial strain, if present in a liquid leavening product prepared according to the present invention, is any lactic acid bacteria strain, preferably a strain of *Lactobacillus,* more preferably a strain of *Lactobacillus plantarum* or *Lactobacillus brevis.* In another embodiment a blend of different lactic acid bacteria is present in the leavening agent preferably a blend of *Lactobacillus plantarum* and *Lactobacillus brevis.*

In the context of the present invention, the term "cereal" refers to plants of the botanical family of the *Poaceae,* particularly to the edible components thereof, including but not limited to species such as wheat, barley, oat, spelt, rye, sorghum, maize, triticale, millet, teff and rice. Preferably, the cereals are chosen among the group of wheat, maize (corn), rice or rye. The term "cereal" includes also malted cereals. "Cereal fraction", in the context of the present invention, refers to all or part of the fractions resulting from mechanical reduction of the size of cereal grains, by any means known in the art, including but not limited to, cutting, rolling, crushing, breakage or milling, with or without fractionation, which in its turn may be performed by any means known in the art, including but not limited to sieving, screening, sifting, blowing, aspirating, centrifugal sifting, windsifting, electrostatic separation, or electric field separation. Non-limiting examples of cereal fractions are flour, whole (grain) flour, bran, semolina,... Preferred cereal fractions are flours, whole flours, brans and/or any combination thereof. "Cereal" or "cereal fraction", in the context of the present invention, also comprises processed cereals and processed cereal fractions. Examples of processed cereals or processed cereals fractions are malted cereals or malted cereal fractions, roasted cereals or roasted cereal fractions ... The term "cereal hydrolysate", in the context of the present invention, refers to products that result from the enzymatic hydrolysis of an aqueous dispersion of a cereal or a cereal fraction. Hydrolytic enzymes are generally amylases, such as alpha- or beta-amylases, beta-glucanases and/or pentosanases and optionally proteases. Cereal hydrolysates may be under liquid or powder (dry) form.

A first aspect of the present invention relates to a method to stabilize a liquid leavening agent or to obtain a stable liquid leavening composition, preferably a method to stabilize the shelf life of the liquid leavening agent and/or the fermentation power or the $CO_2$ production level of a liquid leavening agent, comprising the step of adding a source of amylase to said liquid leavening agent/composition. In particular embodiments, the thus stabilised liquid leavening composition has preferably one or more of the properties as further detailed below.

In particular, the invention relates to a method to stabilize an active liquid leavening composition comprising active yeast cells and optionally lactic acid bacteria cells, wherein said method comprises the steps of

(i) mixing a fermentation substrate, comprising a cereal, a cereal fraction and/or a cereal hydrolysate, with water to obtain a fermentation mixture;
(ii) adding to the fermentation mixture one or more yeast strains, and optionally one or more lactic acid bacteria strains; and
(iii) fermenting the fermentation mixture to obtain a liquid leavening composition; prior to (iv) the addition of the source of amylase to said liquid leavening composition;

wherein the remaining amount of fermentable sugar of the liquid leavening composition is at least 0.5 wt%.

As envisaged herein, the source of amylase is preferably chosen from the group of alpha-amylases, amyloglucosidases and/or active malt flour. Preferably, the source of amylase is active malt flour and/or an amyloglucosidase. Even more preferably, the source of amylase is active malt flour. Particularly in the case of malt flour, and although the addition of malt flour as such to the liquid leavening agent inevitably add flour and fermentable sugars (i.e. factors negatively affecting product stability) to the liquid leavening agent, malt flour supplementation surprisingly promoted the stability of the liquid leavening agent without performing an additional step to eliminate the residual fermentable sugars from the composition.

The skilled person will understand that combinations of different enzymes of different types, such as active malt flour and amyloglucosidase, active malt flour and alpha-amylase, amyloglucosidase and alpha-amylase, or active malt flour, amyloglucosidase and alpha-amylase, are also particularly suited for the purpose of the present invention.

Active malt flour is a dried product made from germinated barley, comprising about 80% carbohydrates, mainly starch and starch degradation products, and about 10% protein. As a source of amylase, it contains mainly alpha and beta-amylase. In particular embodiments, the active malt flour is added to the liquid leavening product in an amount corresponding to an activity between 1 and 16 DU/g, preferably between 2 and 8 DU/g.

The amylase activity of malt flour may be advantageously determined by using the standardized European Brewery Convention method 4.13. In this method the alpha-amylase activity is determined as the time needed for dextrinization of a standardized starch solution in the presence of excess beta-amylase. The alpha-amylase is first extracted with a 5g/litre sodium chloride solution at 20°C. Then a buffered limit dextrin (20 g/l in sodium acetate pH 4.7) is hydrolysed by the enzyme extract in the presence of beta-amylase. The amount of starch remaining in solution at the specified end point of the dextrinization process is estimated visually after addition of iodine and using a colour standard disk. A DU unit is the amount of active malt flour needed to dextrinize one gram of starch in one hour at 20°C in the presence of excess beta-amylase. A person skilled in the art will understand that alternative methods to determine the enzymatic activity of the active malt flour may be used in the context of the present invention.

Amyloglucosidase, also known as glucoamylase or glucan 1,4-alpha-glucosidase (EC 3.2.1.3), is the enzyme that catalyses the hydrolysis of terminal (1,4)-linked alpha-D-glucose residues successively from non-reducing ends of the chains of glucans with release of beta-D-glucose. In particular embodiments of the present invention, the amyloglucosidase is an amyloglucosidase from *Talaromyces emersonii*. In particular embodiments, the amyloglucosidase is added to the liquid leavening agent in a concentration between 1 and 30 AGU/g, preferably between 3 and 15 AGU/g, even more preferably 3 and 7.5 AGU/g.

The amyloglucosidase activity is advantageously measured in AGU Units. An AmyloGlucosidase Unit (AGU) is defined as the amount of enzyme which hydrolyses 1 micromole of maltose per minute under the standard conditions (37°C; 100 mM sodium acetate buffer pH 4.3; substrate concentration: maltose 100 mM). The released glucose may be determined by methods well known in the art. An example is the phosphorylation of the glucose by ATP, in a reaction catalyzed by hexokinase. The glucose-6-phosphate formed is then oxidized to 6-phosphogluconate by glucose-6-phosphate dehydrogenase. In this same reaction, an equimolar amount of NAD+ is reduced to NADH with a resulting increase in absorbance at 340 nm. Alternatively, the released glucose may be converted to gluconolactone by glucose dehydrogenase in the presence of NAD+ that is converted to NADH. The change in the concentration of NAD+ is also measured photometrically at 340 nm. In both cases a standard curve is prepared with glucose solutions of known concentrations. Advantageously, an autoanalyzer system may be used. A suitable autoanalyzer system is, for instance, the Konelab 20 Analyzer (Thermo Fisher Scientific). A person skilled in the art will understand that further alternative methods to determine amyloglucosidase activity can be used in the context of the present invention.

Alpha-amylase (EC 3.2.1.1) is the enzyme that hydrolyses the alpha-(1,4)-bonds between glucose residues of large, alpha-linked glucose-polysaccharides, such as starch and glycogen, yielding glucose, maltose and dextrins. In particular embodiments of the present invention, the alpha-amylase is a fungal amylase, preferably is an alpha-amylase from *Aspergillus* sp, more preferably is an alpha-amylase from *Aspergillus oryzae.* In particular embodiments, the alpha-amylase is added to the liquid leaven agent in a concentration between 10 and 80 SKB/g, preferably between 20 and 40 SKB/g.

The alpha-amylase activity may be advantageously determined using a colorimetric assay based on the hydrolysis of the substrate 4,6-ethylidene-4-nitrophenyl-alpha-D-maltoheptaose. The hydrolysis of this substrate by the alpha-amylase together with an added alpha-glucosidase releases the yellow compound p-nitrophenol that can be measured by photometry at 405 nm. The intensity of the colour is directly proportional to the alpha-amylase activity. The enzymatic reaction is performed in a 50 mM potassium phosphate buffer pH7.0. Suitable reagents kits and apparatuses for determining the alpha-amylase activity are commercially available. Examples of such reagent kits and apparatuses include the AMYL $\alpha$-amylase Liquide (Roche Diagnostics 1.555.963) and the Konelab Arena 20 Analyzer (Thermo Fisher Scientific). Alpha-amylase activity and concentration is advantageously expressed in SKB units, a reference unit commonly used in the fields of bakery and bakery ingredients, originally obtained by hydrolysing starch to a certain iodine value (wherein 1 SKB unit corresponds to the amount of enzyme needed to degrade 1 g of solubilized starch in 1 hour). Nowadays all methods and kits use alternative methods but provide a conversion factor to convert the values in SKB units. A person skilled in the art will understand that further alternative methods to determine alpha-amylase activity may be used to perform the present invention.

There is also provided a stable liquid leavening composition comprising (i) a liquid microbial leavening composition comprising active yeast and/or lactic acid bacteria cells and a fermented cereal substrate, wherein said cereal substrate comprises one or more cereal(s), cereal fraction(s) and/or cereal hydrolysates; and (ii) a source of amylase.

In particular, there is provided a stable liquid leavening composition comprising (i) a liquid microbial composition comprising active yeast cells and optionally lactic acid bacteria cells and a fermented cereal substrate, wherein said substrate comprises one or more cereals, cereal fractions and/or cereal hydrolysates; (ii) a source of amylase and (iii) a fermentable sugar level of at least 0.5 wt%.

In particular embodiments, said stable liquid leavening composition, particularly as obtained by at least one of the methods envisaged herein, comprises a source of amylase, preferably chosen from the group of alpha-amylases, amyloglucosidases, active malt flour or a combination thereof. More preferably, said stable liquid leavening composition comprises an amylase activity of between 1 and 16 DU/g if the amylase is active malt flour, and/or an amylase activity of between 1 and 30 AGU/g if the amylase is amyloglucosidase, and/or of between 10 and 80 SKB/g if the amylase is alpha-amylase.

In particular embodiments, said stable liquid leavening composition or product, particularly as obtained by at least one of the methods envisaged herein, comprises an amount of yeast cells between about $10^5$ and about $5.10^9$ cfu/ml and, optionally, an amount of lactic acid bacteria between 0 and $1.10^9$ cfu/ml.

In particular embodiments, said stable liquid leavening composition or product, particularly as obtained by at least one of the methods envisaged herein, has a pH between about 3.4 and about 6.

In particular embodiments, said stable liquid leavening composition or product, particularly as obtained by at least one of the methods envisaged herein, has a leavening power of (i) between about 600 ml and about 1300 ml of $CO_2$ produced in 2 hours when measured by a SJA analysis as described herein, or (ii) between 300 and 500ml after 4h at 35°C when measured by a risograph analysis as described herein with a dosage of the leavening agent in the dough of 10% based on flour weight.

The leavening power of the leavening agent obtained according to the present invention may be measured by one of the following methods:

- SJA analysis: a dough is made with 280 g of wheat flour, leavening agent or yeast in an amount corresponding to 1.37 g of yeast dry matter, 5.04 g of NaCl and water up to a total dough hydration level of 35%. The dough is mixed for 6 minutes in a farinograph (SCHMERSAL) at 30°C. Then 300 g of dough are introduced in a SJA fermentograph (Mekab machine, Mekab i Nässjö AB) chamber at 37°C. The analysis lasts for 2 hours. The result of the analysis is expressed by the addition of the volume of $CO_2$ produced during the first hour and the volume of $CO_2$ produced during the second hour.

- risograph analysis: the leavening power can be measured with a Risograph (National Manufacturing; Lincoln, Nebraska, USA). The analysis is done according to the following method: a dough is prepared as in the SJA method. A 100 g piece of dough is placed in a sample container of the Risograph and incubated at 35°C. The CO2 volume produced by the dough is measured and compiled by the software (RisoSmart, National Manufacturing; Lincoln, Nebraska, USA) during 4h.

As envisaged herein, the cereal may be any cereal. The cereal fraction may be any cereal fraction. The cereal hydrolysate may be any cereal hydrolysate. Preferably the cereal fraction is wheat flour, wheat semolina or durum wheat semolina, more preferably durum wheat semolina. Preferably the cereal hydrolysate is a wheat flour hydrolysate or a wheat semolina hydrolysate, more preferably a durum wheat semolina hydrolysate. In particular embodiments, the amount of cereal and/or cereal fraction(s) and/or cereal hydrolysate(s) used as fermentation substrate is preferably comprised between 10 and 50% (weight / weight of the mixture before fermentation).

Another aspect of the present invention relates to a method for preparing a stabilized liquid leavening agent or stable liquid leaven composition or a method to stabilize a leavening agent that comprises the steps of:

(i) mixing a fermentation substrate with water to obtain a fermentation mixture;
(ii) adding to the fermentation mixture

   ◦ one or more yeast strains, or
   ◦ one or more lactic acid bacteria strains or
   ◦ one or more yeast strains and one or more lactic acid bacteria strains;

(iii) fermenting the fermentation mixture to obtain a liquid leavening composition;
(iv) adding a source of amylase (to the liquid leavening composition) chosen from:

   ◦ active malt flour, preferably in an amount to obtain between 1 and 16 DU/g in the liquid leavening agent, more preferably between 2 and 8 DU/g; and/or
   ◦ amyloglucosidase, preferably in an amount to obtain between 1 and 30 AGU/g in the liquid leavening agent, more preferably between 3 and 15 AGU/g, even more preferably 3 and 7.5 AGU/g; and/or
   ◦ alpha-amylase, preferably in an amount to obtain between 10 and 80 SKB/g in the liquid leavening agent, more preferably between 20 and 40 SKB/g,

to obtain a stable liquid leavening composition.
In particular embodiments, said method further comprises the optional steps of
(v) adding one or more additional yeast strains and/or lactic acid bacteria, and/or
(vi) adding additional stabilizing agents to the obtained liquid leavening composition.

Advantageously, said method does not comprise a step of eliminating the fermentable sugars after amylase addition, although the source of amylase (e.g. active malt flour, any amylase/amyloglucosidase composition comprising flour or starch as carrier or filler agent) may comprise important levels of fermentable sugars.

As envisaged herein, the terms "fermentation" or "fermenting" refer to a microbial process in which microorganisms, such as e.g. lactic acid bacteria and/or yeasts, convert carbohydrates to carbon dioxide, organic acids, and/or alcohols.

As envisaged herein, the fermentation substrate comprises one or more cereal(s), cereal fraction(s) and/or cereal hydrolysates, and optionally a nitrogen source, a phosphorous source, vitamins and/or minerals. In certain embodiments, additional ingredients may be added to the fermentation mixture before, during, and/or after the fermentation step (iii). These additional ingredients may be chosen among a source of nitrogen, a source of phosphorous proteins, vitamins, minerals and/or non-amylase stabilizing agent. In particular embodiments, said fermentation substrate comprises between 5 and 10% cereal(s), cereal fraction(s) and/or cereal hydrolysate(s) (calculated as the weight of fermentable sugars (having a degree of polymerisation of 1 or 2))/weight of the mixture at the end of the fermentation) and depends on the desired final amount of biomass.

In certain embodiments, the yeast and/or lactic acid bacteria strains (of step ii) are added to the entirety of the fermentation mixture and mixed in a single step. In other embodiments, the fermentation mixture and the yeast and/or lactic acid bacteria strains are gradually mixed, with additional supplementation of fermentation mixture during the fermentation: for instance, the fermentation substrate may be added as a fed-batch.

The nitrogen source, which may be optionally present in the fermentation substrate, may be any nitrogen source suitable for the fermentation of microorganisms, such as yeasts or lactic acid bacteria. Examples of nitrogen sources are ammonium hydroxide ($NH_4OH$), protein hydrolysate(s), yeast extract(s), urea, amino acids,... A preferred nitrogen source is $NH_4OH$. The total amount of the nitrogen source added to the mixture is preferably between 0.13 and 0.75 % (weight of equivalent $NH_4OH$ / weight of the mixture at the end of the fermentation) and depends on the target protein content of the yeast biomass at the end of fermentation, on the protein content of the inoculum and on the nitrogen content of the fermentation substrate. In certain embodiments, the nitrogen source is mixed with the entirety of the fermentation mixture. In other embodiments, the fermentation mixture and the nitrogen source are gradually mixed, with additional supplementation of the nitrogen source during the fermentation: for instance, the fermentation substrate/nitrogen source may be added as a fed-batch.

The phosphorus source, which may be optionally present in the fermentation substrate, may be any phosphorus source suitable for the fermentation of microorganisms. A suitable phosphorus source is for example $H_3PO_4$. The total amount of the phosphorus source added to the mixture is preferably between 0.11 and 0.25% (weight of equivalent $H_SPO_4$ / weight of the mixture at the end of the fermentation) and depends of the target phosphorus content of the yeast biomass at the end of fermentation and the initial phosphorus content of the fermentation.

The type and amounts of vitamins and minerals, which may optionally be present in the fermentation substrate, may vary depending of the substrate and yeast strain used. There are usually chosen among sulphur (S), potassium (K), magnesium (Mg), calcium (Ca), sodium (Na), zinc (Zn), iron (Fe), copper (Cu), silicon (Si), manganese (Mn), cobalt (Co), molybdenum (Mo), boron (B), iodine (I), aluminium (Al) biotin (B8), thiamine (B1), pantothenate (B3), inositol, pyridoxine (B6), nicotinic acid (PP)...

Before being mixed with/added to the fermentation mixture according to step (ii), the yeast, as envisaged herein, may be prepared by methods well known to the skilled person. For example, the yeast may be grown on molasses or cereal hydrolysate(s) in successive steps: a preculture, a batch culture followed by a seed yeast fermentation in fed-batch (upscaling process). The amount of yeast added to the mixture is preferably between $10^7$ and $5.10^9$ colony forming units (CFU) / g of fermentation substrate. In certain embodiments of the present invention, for example when the fermentation is started in the absence of yeast (lactic acid bacteria fermentation), yeast strain(s) may be added during and/or at the end of the fermentation step in a concentration between $10^6$ and $10^9$ CFU/ml.

The amount of lactic acid bacteria, as envisaged herein, added to the fermentation substrate is preferably between $10^5$ and $10^9$ colony forming units (CFU)/g fermentation substrate.

The fermentation step is performed using methods well-known in the art and adjusted depending on the desired type of leavening agent. Fermentation time may be from 6 to 72 hours. Fermentation substrate (cereal, cereal fraction(s) and/or cereal hydrolysate(s), with optional a nitrogen source and/or a phosphorus source) may be added at the beginning (batch fermentation) or at different stages during the fermentation (step by step or progressively such as in a fed-batch fermentation). Fermentation substrate addition may be controlled by continuously evaluating specific parameters of the fermentation (such as but not limited to residual substrate concentration, $pO_2$ or ethanol concentration ...). Other fermentation parameters such as temperature, pH, $pO_2$, lactic acid concentration and/or acetic acid concentration may be monitored and maintained at specific values according to the desired fermentation profile.

At the end of the fermentation a source of amylase is added. In particular embodiments, the source of amylase is chosen from the group of active malt flour, amyloglucosidase and/or alpha-amylase. More preferably, the source of amylase is active malt flour or amyloglucosidase. Even more preferably, the source of amylase is malt active flour.

Preferably, the source of amylase is added in an amount to obtain in the liquid leavening composition between:

○ 1 and 16 DU/g liquid leavening composition of active malt flour, preferably between 2 and 8 DU/g; and/or
○ 1 and 30 AGU/g liquid leavening composition of amyloglucosidase, preferably between 3 and 15 AGU/g, even more preferably 3 and 7.5 AGU/g; and/or
○ 10 and 80 SKB/g liquid leavening composition of alpha-amylase, preferably between 20 and 40 SKB/g

The skilled person will understand that combinations of different enzymes of different types, such as active malt flour and amyloglucosidase, active malt flour and alpha-amylase, amyloglucosidase and alpha-amylase or active malt flour, amyloglucosidase and alpha-amylase are also particularly suited for the purpose of the present invention.

Optionally, at the end of the fermentation step, additional stabilizers may be added to the liquid leavening composition. Suitable additional stabilizers may be chosen among pectin, alginate, carrageenan(s), agar, Arabic gum, tragacanth gum, karaya gum, ghatti gum, guar gum, locust bean gum, tara gum, xanthan gum, gellan gum, welan gum. A particularly suitable additional stabilizer is xanthan gum.

The stable liquid leaven compositions, as obtainable by the methods of the present invention, are much more stable than the liquid leavening agents and compositions known in the art. The level of improvement will vary depending on the type of leavening agent/composition. Yeast-based leavening compositions are generally more stable than liquid leavening compositions containing both lactic acid bacteria and yeast. The stability of a liquid leavening composition may be assessed for example by measuring its leavening power using one of the methods described above (SJA analysis or Risograph analysis) at intervals during storage. Advantageously, the leavening power of a liquid leavening according to the present invention is improved after storage at 4°C for 21 days by at least 25%, compared to a liquid leavening agent/composition known in the art, without a source of amylase as stabilizing agent. Preferably, the stable liquid leaving composition of the present invention has a gassing power after storage comparable to fresh yeast. Alternatively, the stability of liquid leavening agents/compositions may be assessed by performing baking tests. Breads are prepared using a standardized method with liquid leavening agents according or not to the present invention and this at regular intervals during the storage of the liquid leavening agents. The volumes and/or the heights of the baked breads are determined. The relative stability of the liquid leavening agents is directly related to the ratio between the measured values.

In particular embodiments, the liquid leavening composition according to the present invention maintains at least about 50%, such as at least about 60%, 70% or 80% of its leavening activity after 7 or 14 days of storage.

A further aspect provides the use of the stable liquid leavening agents or compositions obtained as taught herein, as an ingredient for the preparation of a food product, preferably a dough or a baked product, preferably a bakery or patisserie product. Preferably, such further aspect provides the use of a leavening composition comprising a yeast and/or lactic acid bacteria strain, a fermented cereal and/or a cereal fraction, and a source of amylase, preferably active malt flour, an amyloglucosidase and/or an alpha-amylase, as an ingredient for the preparation of a food product, preferably a dough or a baked product, more preferably a bakery or a patisserie product.

In particular embodiments, the baked product is a leavened baked product, wherein the major ingredient is flour derived from cereal grains. In addition, the baked product may further contain fat or fat replacer, sugar, eggs, gluten, starch, hydrocolloids, enzymes, emulsifiers, oxidizing or reducing compounds, prebiotics compounds and/ or an improver composition.

Examples of baked products are bakery products and patisserie products. Examples of bakery and patisserie products are bread, country-style breads, baguettes, (Belgian) rolls, soft rolls, donuts, buns, microwavable buns, Danish pastry, hamburger rolls, pizza and pita bread, cakes, waffles, brioches, panettones, ciabattas, and focaccias. The preparation of the baked products with the stabilised liquid leavening agents or compositions of the invention does not require any additional unusual ingredients or special process steps. Baked product ingredients well known by the skilled artisan may be used.

Typically, the liquid leaven compositions are used at a dosage between 2 and 50% based on flour weight in the final dough (see for example Marco Gobbetti & Michael Gänzle, 2013. Handbook on Sourdough Biotechnology. ISBN: 978-1-4614-5424-3). The skilled artisan knows how to adjust the water content of the dough to obtain a dough suitable for being baked. Multi-stages dough preparations are other usual methods known to the skilled artisan.

## Examples

### Example 1: liquid leavening agents

Yeast strains: *Kazachstania bulderii* (MUCL54530) and *Saccharomyces cerevisiae* (regular baker's yeast).

Inoculum: the yeast strains are stored at -70°C and maintained on solid YPD medium (20 g/l peptone; 10 g/l yeast extract; 20 g/l agar). An isolated colony of each strain is inoculated in a first flask containing 25 mL of liquid YPD medium (20 g/l peptone; 10 g/l yeast extract) and maintained 24h at 100 rpm and 30°C. 5 ml of this culture are inoculated in two flasks containing 200 mL liquid medium (bacteriological peptone 3.5 g/l; yeast extract 3 g/l; $KH_2PO_4$ 2 g/l; $MgSO_4 \cdot 7 H_2O$ 1.83 g/l; $(NH_4)_2SO_4$ 1 g/l; D-Glucose 20 g/l; sucrose 55 g/l; penicillin 0.0004 g/l; pH = 4.8) and maintained 48h at room temperature under agitation.

The liquid leavening agents are obtained after three successive fermentation steps performed in 15 l fermenter (C10-3K Biostat C-DCU (Sartorius) :

1. First step: 10 l of sterile G3 medium (malt extract 50 g/l; sugar beet molasse 60 g/l; $MgSO_4.7H_2O$ 0,0915g/l, $(NH_4)_2SO_4$ 0.5 g/l, pH = 4.7) are inoculated with the previous flasks of yeast at $10^7$ cells/ml of fermentation medium. The fermentation lapses for about 15 to 20 hours in batch culture mode with an air flow of 17 l/min at pH 4.7 and at 30°C. The amount of biomass depends on the yeast strain and on its growth performances. Typical amount of *Kazachstania bulderi* biomass is between 4 and 10 g dry matter/l.

After fermentation, the fermentation broth is centrifuged for 5 minutes at 5000 rpm in an AvantiTM J-20 centrifuge (Beckman Coulter) and washed 2 times with cold water. The pellet (Fresh yeast ≈30% dry matter) is resuspended in a volume of water to obtain a cream yeast composition with a dry matter of about 20%.

2. Second step: cream yeast of the first fermentation step (amount equivalent to about 3.7 to 4.6 g of yeast dry matter per liter) is used to inoculate the next fermentation. The second fermentation lapses for about 15 hours in fed-batch culture mode with an air flow of 7.5 l/min, at 30°C and a pH between 3.9 and 6 chosen according to the yeast strain characteristics. During the fermentation, the sugar source (cereal hydrolysate), the nitrogen source $NH_4OH$ (6.25% solution) and the phosphorus source $H_3PO_4$ (17.8% solution) are fed progressively into the bioreactor. Vitamins and minerals amounts are adjusted according to the yeast strains requirements. Solutions of $H_2SO_4$ (5%), of NaOH (29%) and of anti-foam allow respectively the regulation of pH and the prevention of foam formation. The amount of biomass at the end of the fermentation depends on the strain type and on its ability to grow. Typical amount of *Kazachstania bulderi* biomass at the end of the second step is between 25 and 35 g yeast dry matter/l. At the end of the fermentation, cells are recovered and washed as described above.

3. Third step: cream yeast of the second fermentation step (amount equivalent to about 8.3 g of yeast dry matter per liter) is used to inoculate the final fermentation. The fermentation lapses for about 15 hours in fed-batch culture mode with an air flow of 7.5 l/min, at 30°C and a pH between 3.9 and 6 chosen according to the yeast strain characteristics. During the fermentation, the sugar source (cereal hydrolysate), the nitrogen source $NH_4OH$ and the phosphorus source $H_3PO_4$ are fed progressively into the bioreactor. Vitamins and minerals amounts are adjusted according to the yeast strains requirements. Solutions of $H_2SO_4$ (5%), of NaOH (29%) and of anti-foam allow respectively the regulation of pH and the prevention of foam formation. The amount of biomass at the end of the fermentation depends on the strain type and on its ability to grow. Typical amount of *Kazachstania bulderi* biomass is between 40 and 75 g yeast dry matter/l.

At the end of the last fermentation, *Talaromyces emersonii* amyloglucosidase (Goldcrust 3300 BG Novozymes) is added to the liquid leavening agent in an amount to have 7.5 AGU/g and the liquid leaven is cooled at 4°C. Part of the liquid leavening agent not treated with amyloglucosidase is kept as control. Liquid leavening agents are stored at 4°C.

The yeast biomass of the liquid leaven is determined as follows: a known mass or volume of liquid leaven is centrifuged during 15 minutes (Avanti™ J-20, BECKMAN COULTER), at 7000 rpm and 4°C. The supernatant is discarded. The yeast layer at the surface of the pellet is recovered by scraping and weighed to determine the wet biomass. Dry matter is determined by placing the recovered yeast in an oven at 105°C for 24 hours.

The leavening power of the samples is measured by the SJA method at different intervals during storage. In this method, doughs are made with: 280 g wheat flour (DUO, Ceres, Belgium), leavening agent or yeast in an amount corresponding to 2.1 g of yeast dry matter, 5.04 g of NaCl, water up to a total dough hydration level of 35% (Table 2 and 3).

Doughs are mixed during 6 minutes in a farinograph (SCHMERSAL) at 30 °C. 300 g of dough are introduced into a SJA fermentograph (Mekab machine, Mekab i Nässjö AB) chamber at 37°C. The $CO_2$ production is measured during two hours with an intermediate mixing step after one hour.

The SJA (expressed in ml $CO_2$) is calculated according to the following formula:

$$SJA\ (ml\ CO_2) = \frac{(V_1 + V_2) \times P_r}{1013}$$

wherein $V_1$ is the volume of $CO_2$ produced after 1 hour, $V_2$ the volume of $CO_2$ produced during the 2nd hour and $P_r$ the real air pressure (mb/hPa).

Table 2: SJA results - *Kazachtania bulderi*

| ml $CO_2$ | Time (weeks) | | | |
|---|---|---|---|---|
| | 0 | 4 | 6 | 8 |
| Control | 799 | 575 | 499 | 366 |
| Liquid leaven according to the invention | 838 | 629 | 616 | 591 |

Table 3: SJA results - *Saccharomyces cerevisiae*

| ml $CO_2$ | Time (weeks) | | | |
|---|---|---|---|---|
| | 0 | 2 | 4 | 6 |
| Control | 1311 | 1142 | 897 | |
| Liquid leaven according to the invention | 1311 | 1271 | 1132 | 1003 |

The liquid leavening agent treated with amyloglucosidase is much more stable than the untreated leaven.

Example 2: Liquid leavening agent

Liquid leavening agent has been prepared according to the following process. A liquid dough is prepared by mixing 3612 g water, 2800 g Durum wheat semolina (Durum wheat remilled semolina Rossa, Industria Molitoria Mininini SRL, Italy), $10^7$ cells of a *Lactobacillus plantarum* strain and $10^7$ cells of a *Lactobacillus brevis* strain. The mixture is incubated at 35°C in a C10-3K Biostat C-DCU fermentor (Sartorius Stedim GmbH) at 500 rpm. 600 g of durum wheat semolina are added after 15h and after 24h incubation. After 39h, 76 g of cream yeast (*Saccharomyces cerevisiae,* $10^9$ cells/ml) are added and the incubation is pursued at 30°C. After 63h, the fermented mixture is cooled at 4°C and 304 g cream yeast are added (= Control leaven).

Active malt flour (malt flour special, C.Thywissen Malz Muhle GmbH) is added to the liquid leaven at a concentration of 4 DU/g.

The leavening power of the samples is evaluated by the risograph method at different intervals during storage. In this method doughs are made with: 280 g wheat flour (DUO, Ceres, Belgium), 72.4 ml distilled water, 63.2 mL of a 8.215% NaCl solution and 28 g of liquid leavening agent. For control liquid leavening agents, an equivalent amount of enzyme was added just before the analysis (control doughs). Doughs are mixed during 6 minutes in a faringograph (SCHMERSAL) at 30 °C. A 100g piece of dough is placed in a sample container of a Risograph (National Manufacturing; Lincoln, Nebraska, USA) and incubated at 35°C. The $CO_2$ volume produced by the dough is measured and compiled by the software (RisoSmart, National Manufacturing; Lincoln, Nebraska, USA) during 4h (Table 4).

Table 4: Risograph results

| ml CO2; dosage 10%; proofing time:4h 35°C | T 0 Days | T 7 Days | T 14 Days | T 21 Days |
|---|---|---|---|---|
| Control leaven | 433 | 160 | 36 | 20 |
| Liquid leaven according to the invention | 422 | 335 | 213 | 169 |
| Control leaven with addition of malt flour (4DU/g) before dough preparation | 420 | 156 | 33 | - |

The liquid leavening compositions according to the invention shows a much better stability than the control leavens. Addition of the amylase after storage but before baking did not stabilize the fermentation power.

The liquid leavening compositions were used to prepare pan wheat breads at different intervals during storage. The composition of the bread doughs is shown on table 5.

Table 5: doughs compositions

| Ingredient (baker's %)) | 1 | 2 |
|---|---|---|
| Wheat flour (DUO - Ceres, Belgium) | 100 | 100 |

(continued)

| Ingredient (baker's %)) | 1 | 2 |
|---|---|---|
| Water | 55 | 57 |
| Salt | 2 | 2 |
| Bread improver** | 1 | 1 |
| Control liquid leaven | 20 | |
| Malt flour | 1 | |
| Liquid leavening composition according to the invention | | 20 |
| ** The improver is a regular bread improver that contains as main ingredients enzyme (endo-xylanase), ascorbic acid and emulsifiers. It does not contain amylase. | | |

The ingredients were mixed for 2 min at low speed and 6 min at high speed in a dough mixer (Diosna SP24). Temperature in the bakery was about 25°C. Dough temperature was about 26°C. After a bulk fermentation for 60 min the dough was divided in 600 g pieces and submitted to an intermediate proofing step of 5 min at 25°C.

A final proofing step of the individuals doughs, placed in molds, was performed in a Koma fermentation room (180 min, 29°C, 70% relative humidity) before baking at 230°C for 35 min with steam in a Miwe Condo oven.

After baking the volume of the breads is measured by the rapeseeds displacement method (Table 6).

Table 6: bread volumes

| ml/bread | Storage time (weeks) | | |
|---|---|---|---|
| | 0 | 2 | 4 |
| Bread with control liquid leaven | 2550 | 1350 | 1000 |
| Bread with liquid leaven according to the invention | 2450 | 2125 | 2100 |

The liquid leavening composition according to the invention is much more stable than the control.

Example 3 : liquid leaven

Liquid leaven has been prepared as in example 2. At the end of the fermentation, the following sources of amylase were added to portions of the liquid leaven:

(i). Malt flour (malt flour special, C.Thywissen Malz Muhle GmbH) at a concentration of 2.5, 5 and 10 % w/w corresponding respectively to 2, 4, 8 DU/g.

(ii). *Talaromyces emersonii* Amyloglucosidase (Goldcrust 3300 BG, Novozymes) at a concentration of 0.75, 1.5 and 3% (w/w), corresponding respectively to 4, 8 and 16 AGU/g.

(iii). *Aspergillus oryzae* Alpha-amylase (Fungamyl Ultra BG, Novozymes) at a concentration of 0.05 and 0.1% (w/w), corresponding respectively to 21 and 42 SKB/g.

The leavening power of the samples is evaluated by the risograph method as in example 2 at different intervals during storage. The residual gas power is the percentage of risograph activity remaining in a sample after storage compared to the activity of the original sample (Table 7).

The amount of sugars in the liquid leavening compositions has been determined using the official method AOAC 996.04 ICUMSA using a HPAE-PAD (High Performance Anion-Exchange Pulsed Amperometry Detection) Dionex chromatography with a CarboPac PA1 column. The Dionex analytical system is made up of an autosampler AS 50, a gradient pump GS 50, an eluent generator EG40 and an electrochemical detector ED 50 with amperometric cell and gold working electrode (Dionex Corp). 50 µl of the sample is taken by the autosampler and injected in the 150 mM NaOH eluent at a flow rate of 1ml/min.

The amount of sugars is defined as the sum of glucose, fructose and maltose present in the liquid leaven (Table 7).

Table 7

| Storage time (days) | 0 | 7 | 14 | 1 |
|---|---|---|---|---|
| | residual gas power (%) | | | sugars (% w/w) |
| control (no amylase) | 100 | 37 | 8 | 0.15 |
| malt flour 2 DU/g | 100 | 52 | 31 | 0.32 |
| malt flour 4 DU/g | 100 | 80 | 57 | |
| malt flour 8 DU/g | 100 | 69 | 63 | 1.13 |
| amyloglucosidase 4 AGU/g | 100 | 73 | 61 | 1.19 |
| amyloglucosidase 8 AGU/g | 100 | 85 | 58 | |
| amyloglucosidase 16 AGU/g | 100 | 76 | 50 | 1.43 |
| alpha-amylase 21 SKB/g | 100 | 67 | 30 | 0.46 |
| alpha-amylase 42 SKB/g | 100 | 44 | 29 | 0.19 |

This clearly shows that stable liquid leavening compositions can be obtained when adding a source of amylase, even at fermentable sugar levels exceeding 0.5 wt%.

**Claims**

1. A method to stabilize an active liquid leavening composition comprising active yeast cells and optionally lactic acid bacteria cells, wherein said method comprises the steps of

   (i) mixing a fermentation substrate, comprising a cereal, a cereal fraction and/or a cereal hydrolysate, with water to obtain a fermentation mixture;
   (ii) adding to the fermentation mixture one or more yeast strains, and optionally one or more lactic acid bacteria strains; and
   (iii) fermenting the fermentation mixture to obtain a liquid leavening composition; prior to (iv) the addition of a source of amylase to said liquid leavening composition;

   wherein the remaining amount of fermentable sugar of the liquid leavening composition is at least 0.5 wt%.

2. The method according to claim 1 wherein the source of amylase is an alpha-amylase, an amyloglucosidase or active malt flour or any combination thereof.

3. The method according to claim 2 wherein the source of amylase is:

   - an alpha-amylase in a concentration between 10 and 80 SKB/g liquid leavening agent; and/or
   - an amyloglucosidase in a concentration between 1 and 30 AGU/g liquid leavening agent; and/or
   - active malt flour in a concentration between 1 and 16 DU/g liquid leavening agent.

4. The method according to claim 2 or 3 wherein the source of amylase is an amyloglucosidase and/or active malt flour.

5. The method according to any of claims 1 to 4, wherein the liquid leavening agent comprises at least one *Saccharomyces* or *Kazachstania* strain.

6. The method according to claim 5, wherein said yeast strain comprises at least one *Saccharomyces cerevisiae* or *Kazachstania bulderi* strain.

7. The method according to claim 6 wherein said yeast strain comprises *Kazachstania bulderi* strain MUCL54530.

8. The method according to any of claims 1 to 7, wherein the liquid leavening composition comprises an amount of yeast cells between about $10^5$ and about $5.10^9$ cfu/ml and, optionally, an amount of lactic acid bacteria between 0 and $1.10^9$ cfu/ml.

9. The method according to any of claims 1 to 8, wherein the liquid leavening composition has a pH between about 3.4 and about 6.

10. The method according to any one of claims 1 to 9, wherein the fermentation substrate further comprises a nitrogen source, a phosphorous source, vitamins and/or minerals.

11. The method according to any one of claims 1 to 10 further comprising the step of (v) adding one or more additional yeast strains and/or lactic acid bacteria

12. The method according to any of claims 1 11 further comprising the step of (vi) adding additional stabilizing agents to the obtained liquid leavening composition, wherein the additional stabilizers are chosen pectin, alginate, carrageenan(s), agar, Arabic gum, tragacanth gum, karaya gum, ghatti gum, guar gum, locust bean gum, tara gum, xanthan gum, gellan gum and/or welan gum.

13. A method to prepare a baked product comprising the steps of (a) preparing a stable liquid leavening composition by the steps of

(i) mixing a fermentation substrate, comprising a cereal, a cereal fraction and/or a cereal hydrolysate, with water to obtain a fermentation mixture;
(ii) adding to the fermentation mixture one or more yeast strains, and optionally one or more lactic acid bacteria strains; and
(iii) fermenting the fermentation mixture to obtain a liquid leavening composition; prior to (iv) the addition of a source of amylase to said liquid leavening composition;

wherein the remaining amount of fermentable sugar of the liquid leavening composition is at least 0.5 wt%; and wherein the liquid leavening composition comprises an amount of yeast cells between about $10^5$ and about $5.10^9$ cfu/ml; and
(b) adding the obtained stable liquid leavening composition to the recipe of said baked product.

## Patentansprüche

1. Verfahren zum Stabilisieren einer aktiven flüssigen Triebmittelzusammensetzung, die aktive Hefezellen und gegebenenfalls Milchsäurebakterienzellen umfasst, wobei das Verfahren die Schritte umfasst:

(i) Mischen eines Fermentationssubstrats, das ein Getreide, eine Getreidefraktion und/oder ein Getreidehydrolysat umfasst, mit Wasser, um ein Fermentationsgemisch zu erhalten;
(ii) Zugeben eines oder mehrerer Hefestämme und gegebenenfalls eines oder mehrerer Milchsäurebakterienstämme zu dem Fermentationsgemisch; und
(iii) Fermentieren des Fermentationsgemischs, um eine flüssige Triebmittelzusammensetzung zu erhalten; vor
(iv) dem Zugeben eine Quelle von Amylase zu der flüssigen Triebmittelzusammensetzung;

wobei die verbleibende Menge an fermentierbarem Zucker der flüssigen Triebmittelzusammensetzung wenigstens 0,5 Gew.-% beträgt.

2. Verfahren gemäß Anspruch 1, wobei die Quelle von Amylase eine alpha-Amylase, eine Amyloglucosidase oder aktives Malzmehl oder eine Kombination davon ist.

3. Verfahren gemäß Anspruch 2, wobei die Quelle von Amylase ist:

- eine alpha-Amylase in einer Konzentration von zwischen 10 und 80 SKB/g an flüssigem Triebmittel; und/oder
- eine Amyloglucosidase in einer Konzentration von zwischen 1 und 30 AGU/g an flüssigem Triebmittel; und/oder
- aktives Malzmehl in einer Konzentration von zwischen 1 und 16 DU/g an flüssigem Triebmittel.

4. Verfahren gemäß Anspruch 2 oder 3, wobei die Quelle von Amylase eine Amyloglucosidase und/oder aktives Malzmehl ist.

5. Verfahren gemäß einem der Ansprüche 1 bis 4, wobei das flüssige Triebmittel wenigstens einen *Saccharomyces-* oder *Kazachstania*-Stamm umfasst.

6. Verfahren gemäß Anspruch 5, wobei der Hefestamm wenigstens einen *Saccharomyces-cerevisiae-* oder *Kazachstania-bulderi*-Stamm umfasst.

7. Verfahren gemäß Anspruch 6, wobei der Hefestamm den *Kazachstania-bulderi*-Stamm MUCL54530 umfasst.

8. Verfahren gemäß einem der Ansprüche 1 bis 7, wobei die flüssige Triebmittelzusammensetzung eine Menge an Hefezellen von zwischen etwa $10^5$ und etwa $5.10^9$ cfu/ml und gegebenenfalls eine Menge an Milchsäurebakterien von zwischen 0 und $1.10^9$ cfu/ml umfasst.

9. Verfahren gemäß einem der Ansprüche 1 bis 8, wobei die flüssige Triebmittelzusammensetzung einen pH-Wert von zwischen etwa 3,4 und etwa 6 aufweist.

10. Verfahren gemäß einem der Ansprüche 1 bis 9, wobei das Fermentationssubstrat ferner eine Stickstoffquelle, eine Phosphorquelle, Vitamine und/oder Mineralstoffe umfasst.

11. Verfahren gemäß einem der Ansprüche 1 bis 10, ferner umfassend den Schritt (v) Zugeben eines oder mehrerer zusätzlicher Hefestämme und/oder Milchsäurebakterien.

12. Verfahren gemäß einem der Ansprüche 111, ferner umfassend den Schritt (vi) Zugeben zusätzlicher Stabilisierungsmittel zu der erhaltenen flüssigen Triebmittelzusammensetzung, wobei die zusätzlichen Stabilisierungsmittel ausgewählt sind aus Pektin, Alginat, Carrageen(en), Agar, Gummi arabicum, Tragantgummi, Karayagummi, Ghattigummi, Guargummi, Johannisbrotkernmehl, Taragummi, Xanthangummi, Gellangummi und/oder Welangummi.

13. Verfahren zur Herstellung einer Backware, umfassend die Schritte (a) Herstellen einer stabilen flüssigen Triebmittelzusammensetzung durch die Schritte

(i) Mischen eines Fermentationssubstrats, das ein Getreide, eine Getreidefraktion und/oder ein Getreidehydrolysat umfasst, mit Wasser, um ein Fermentationsgemisch zu erhalten;
(ii) Zugeben eines oder mehrerer Hefestämme und gegebenenfalls eines oder mehrerer Milchsäurebakterienstämme zu dem Fermentationsgemisch; und
(iii) Fermentieren des Fermentationsgemischs, um eine flüssige Triebmittelzusammensetzung zu erhalten; vor
(iv) dem Zugeben eine Quelle von Amylase zu der flüssigen Triebmittelzusammensetzung;

wobei die verbleibende Menge an fermentierbarem Zucker der flüssigen Triebmittelzusammensetzung wenigstens 0,5 Gew.-% beträgt; und
wobei die flüssige Triebmittelzusammensetzung eine Menge an Hefezellen von zwischen etwa $10^5$ und etwa $5.10^9$ cfu/ml umfasst; und
(b) Zugeben der erhaltenen stabilen flüssigen Triebmittelzusammensetzung zu der Rezeptur der Backware.

## Revendications

1. Méthode destinée à stabiliser une composition levante liquide active comprenant des cellules de levure actives et éventuellement des cellules de bactéries lactiques, ladite méthode comprenant les étapes consistant à:

(i) mélanger un substrat de fermentation, comprenant une céréale, une fraction de céréale, et/ou un hydrolysat de céréale, avec de l'eau, afin d'obtenir un mélange de fermentation;
(ii) ajouter, au mélange de fermentation, une ou plusieurs souches de levure, et éventuellement une ou plusieurs souches de bactéries lactiques; et
(iii) fermenter le mélange de fermentation afin d'obtenir une composition levante liquide; préalablement à
(iv) l'addition d'une source d'amylase à ladite composition levante liquide;

où la quantité restante de sucre fermentescible de la composition levante liquide est d'au moins 0,5% en poids.

**2.** Méthode selon la revendication 1, dans laquelle la source d'amylase est une alpha-amylase, une amyloglucosidase ou une farine de malt active ou une combinaison quelconque de celles-ci.

**3.** Méthode selon la revendication 2, dans laquelle la source d'amylase est:

- une alpha-amylase à une concentration comprise entre 10 et 80 SKB/g d'agent levant liquide; et/ou
- une amyloglucosidase à une concentration comprise entre 1 et 30 AGU/g d'agent levant liquide; et/ou
- une farine de malt active à une concentration comprise entre 1 et 16 DU/g d'agent levant liquide.

**4.** Méthode selon la revendication 2 ou 3, dans laquelle la source d'amylase est une amyloglucosidase et/ou une farine de malt active.

**5.** Méthode selon l'une quelconque des revendications 1 à 4, dans laquelle l'agent levant liquide comprend au moins une souche de *Saccharomyces* ou de *Kazachstania*.

**6.** Méthode selon la revendication 5, dans laquelle ladite souche de levure comprend au moins une souche de *Saccharomyces cerevisiae* ou de *koz$\alpha$chstonio bulderi*.

**7.** Méthode selon la revendication 6, dans laquelle ladite souche de levure comprend la souche MUCL54530 de *koz$\alpha$chstonio bulderi*.

**8.** Méthode selon l'une quelconque des revendications 1 à 7, dans laquelle la composition levante liquide comprend une quantité de cellules de levure comprise entre environ $10^5$ et environ $5\times10^9$ ufc/ml et, éventuellement, une quantité de bactéries lactiques comprise entre 0 et $1\times10^9$ ufc/ml.

**9.** Méthode selon l'une quelconque des revendications 1 à 8, dans laquelle la composition levante liquide possède un pH compris entre environ 3,4 et environ 6.

**10.** Méthode selon l'une quelconque des revendications 1 à 9, dans laquelle le substrat de fermentation comprend en outre une source d'azote, une source de phosphore, des vitamines et/ou des minéraux.

**11.** Méthode selon l'une quelconque des revendications 1 à 10, comprenant en outre l'étape consistant à
(v) ajouter une ou plusieurs souches de levure et/ou bactéries lactiques supplémentaires.

**12.** Méthode selon l'une quelconque des revendications 1 à 11, comprenant en outre l'étape consistant à
(vi) ajouter des agents stabilisants supplémentaires à la composition levante liquide obtenue, où les agents stabilisants supplémentaires sont choisis parmi les pectines, les alginates, le(s) carraghénane(s), l'agar-agar, la gomme arabique, la gomme adragante, la gomme karaya, la gomme ghatti, la gomme guar, la gomme de caroube, la gomme tara, la gomme xanthane, la gomme gellane et/ou la gomme de welane.

**13.** Méthode destinée à la préparation d'un produit de panification, comprenant les étapes consistant à

(a) préparer une composition levante liquide stable, par les étapes consistant à:

(i) mélanger un substrat de fermentation, comprenant une céréale, une fraction de céréale, et/ou un hydrolysat de céréale, avec de l'eau, afin d'obtenir un mélange de fermentation;
(ii) ajouter, au mélange de fermentation, une ou plusieurs souches de levure, et éventuellement une ou plusieurs souches de bactéries lactiques; et
(iii) fermenter le mélange de fermentation afin d'obtenir une composition levante liquide; préalablement à
(iv) l'addition d'une source d'amylase à ladite composition levante liquide;

où la quantité restante de sucre fermentescible de la composition levante liquide est d'au moins 0,5% en poids; et
où la composition levante liquide comprend une quantité de cellules de levure comprise entre environ $10^5$ et environ $5\times10^9$ ufc/ml; et
(b) ajouter la composition levante liquide stable obtenue à la formule dudit produit de panification.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0684306 B2
- EP 0684308 B2

- EP 1711062 A

**Non-patent literature cited in the description**

- **SALIM-UR-REHMAN.** *Trends in Food Science and Technology,* 2006, vol. 17, 557

- **MARCO GOBBETTI ; MICHAEL GÄNZLE.** Handbook on Sourdough Biotechnology. 2013